# EUROPÄISCHE PATENTSCHRIFT

(11) **EP 2 036 799 B1**
(45) Veröffentlichungstag und Bekanntmachung des Hinweises auf die Patenterteilung: **02.12.2009**
(21) Anmeldenummer: 07116137.6
(22) Anmeldetag: 11.09.2007
(51) Int. Cl.: B61G 11/16, F16F 7/12

(54) **Austauschbare Energieverzehreinheit, insbesondere zur Verwendung in Kombination mit einem Puffer**
Replacement energy consumption unit, in particular for use in combination with a buffer
Unité d'absorption d'énergie échangeable, en particulier pour l'utilisation en association avec un tampon

(43) Veröffentlichungstag der Anmeldung: 18.03.2009
(73) Patentinhaber: Voith Patent GmbH, 89522 Heidenheim (DE)
(72) Erfinder: Michael, Gansweidt, 38124 Braunschweig (DE)
(74) Vertreter: Rupprecht, Kay

(56) Entgegenhaltungen:
- EP-A- 0 826 569
- EP-A1- 0 926 381
- DE-C- 747 330
- DE-U1- 29 703 351
- GB-A- 1 351 735
- GB-A- 1 419 698
- US-A- 3 428 150

## Beschreibung

Die vorliegende Erfindung betrifft einen Seitenpuffer mit einer Energieverzehreinheit, welche sich insbesondere für die Verwendung als zusätzliche irreversible Stoßsicherungsstufe zusammen mit einem Bauteil zur Kraftübertragung einsetzen lässt. Die Druckschrift EP 0 926 381 A1 betrifft eine Stoßverzehrvorrichtung mit Verformungsrohr. Um das Verformungsverhalten des Verformungsrohrs zu verbessern und nach Ansprechen der Vorrichtung einen möglichst gleichmäßigen Stoßverkehr über dem Verformungsweg erzielt wird, ist das Verformungsrohr an seinen Enden zwischen zwei Zentrierelementen angeordnet bzw. eingespannt und die Zentrierelemente und damit die Enden des Verformungsrohrs sind gegen Verschiebungen quer zur Stoßrichtung relativ zueinander gehalten. An seinen Enden ist dem Verformungsrohr je ein axiales Widerlager zugeordnet, welches das sich bei einem Stoß verformende Verformungsrohr axial abstützt.

Die Druckschrift DE 747 330 C betrifft einen Hülsenpuffer mit einem integrierten Energieverzehrelement. Der aus diesem Stand der Technik bekannte Hülsenpuffer besteht aus einem Pufferstößel, welcher mit Hilfe einer Pufferstange und einer im Inneren des Pufferstößels vorgesehenen Pufferfeder derart an der Stirnseite eines Wagenkastens befestigt ist, dass der Pufferstößel zum Abdämpfen von moderaten Stößen geeignet ist. Nach Ausschöpfung des maximal zur Verfügung stehenden Dämpfungshubes stößt der Pufferteller gegen einen Flansch an, der in den vorderen Abschnitt eines Verformungsrohres hineinragt.

Die Druckschrift EP 0 826 569 A betrifft eine Aufprallschutzvorrichtung für Schienenfahrzeuge, welche einerseits einen Seitenpuffer und andererseits eine dem Seitenpuffer nachgeschaltete Energieverzehreinheit aufweist. Die Energieverzehreinheit ist als "Crashbox" ausgebildet, die mit einer Seite an der Stirnseite des Wagenkastens lösbar befestigt werden kann, während der Seitenpuffer an der anderen, gegenüberliegenden Seite der Crashbox ebenfalls lösbar befestigt werden kann.

Aus der Schienenfahrzeugtechnik ist allgemein bekannt, beispielsweise die einzelnen Wagenkästen eines mehrgliedrigen Fahrzeuges mit sogenannten Seitenpuffern oder UIC-Puffern auszurüsten, wenn die Wagenkästen nicht über ein Drehgestell miteinander verbunden sind und somit im Fahrbetrieb der Abstand zweier miteinander gekuppelter Wagenkästen variieren kann. Diese Seitenpuffer dienen dazu, die im normalen Fahrbetrieb, beispielsweise beim Abbremsen oder Anfahren auftretenden Stöße aufzunehmen und abzudämpfen.

Für den Seitenpuffer kommt in der Regel ein teleskopartiger Aufbau zum Einsatz, der ein Puffergehäuse, ein darin aufgenommenes Kraftübertragungsglied sowie ein Dämpfungselement in Gestalt einer Feder oder eines Elastomerkörpers aufweist. Bei einem derartigen Aufbau dient das Puffergehäuse als Längsführung und zur Abstützung von Querkräften, während das in dem Puffergehäuse aufgenommene Dämpfungselement zur Kraftübertragung in Längsrichtung dient.

Die Baulänge sowie der Pufferhub, d.h. der Federweg des Dämpfungselements, ist für bestimmte Fahrzeugkategorien in europäischen Richtlinien (beispielsweise UIC-Merkblätter 526, 528) standardisiert. Der Pufferhub eines standardisierten UIC-Puffers liegt beispielsweise in einem Bereich von 100 bis 110 mm. Nach Erreichen des maximalen Pufferhubs ist die Dämpfungseigenschaft des Seitenpuffers ausgeschöpft, infolgedessen die über die charakteristische Betriebslast des Seitenpuffers hinausgehenden Stoßkräfte ungedämpft in das Fahrzeuguntergestell weitergeleitet werden.

Dadurch werden zwar die Stoßkräfte, die während des normalen Fahrbetriebs beispielsweise bei einem mehrgliedrigen Fahrzeug zwischen einzelnen Wagenkästen auftreten, über das in dem Seitenpuffer integrierte, regenerativ ausgebildete Dämpfungselement absorbiert; bei Überschreiten der Betriebslast des Seitenpuffers hingegen, etwa beim Aufprall des Fahrzeuges auf ein Hindernis oder bei einem abrupten Abbremsen des Fahrzeuges, reicht üblicherweise das in dem Seitenpuffer integrierte Dämpfungselement nicht für einen Verzehr der insgesamt anfallenden Energie aus. Dadurch ist die von dem Seitenpuffer bereitgestellte Stoßdämpfung nicht mehr in dem Energieverzehrkonzept des Gesamtfahrzeuges eingebunden, so dass die anfallende Stoßenergie direkt auf das Fahrzeuguntergestell übertragen wird. Dabei wird dieses extremen Belastungen ausgesetzt und unter Umständen beschädigt oder gar zerstört.

Mit dem Ziel, derartige Schäden zu vermeiden, ist es aus dem Stand der Technik allgemein bekannt, die Führungsteile des Hülsenpuffers so auszubilden, dass nach Ausschöpfung des maximalen Pufferhubs, d.h. nach dem Auftreffen der Führungsteile des Seitenpuffers (Pufferhülse und Pufferstößel) auf definierte Anschläge, unter kontrollierter Deformation eine zusätzliche Verkürzungsmöglichkeit vorhanden ist.

In der Druckschrift WO 2005/115818 A1 beispielsweise ist ein Hülsenpuffer beschrieben, bei welchem nach Ausschöpfung der Energieaufnahme des regenerativ ausgebildeten Dämpfungselements Sollbruchverbindungen abreißen, um damit die Verkürzungslänge des Puffers zu vergrößern. Diese vergrößerte Verkürzungslänge erlaubt die plastische Deformation des Puffergehäuses bei Überlast, so dass bei dieser Lösung in destruktiver Weise die Stoßenergie in Verformungsarbeit und Wärme umgewandelt werden kann. Durch die bei Überlast auftretende Deformation des Puffergehäuses ist somit zusätzliche zu der von dem Seitenpuffer bereitgestellten Stoßdämpfung eine Stoßsicherung vorgesehen.

Auch wenn der aus diesem Stand der Technik bekannte Seitenpuffer bis zu einem gewissen Grad das Fahrzeuguntergestell gegen Beschädigungen bei starken Auffahrstößen schützen kann, ist es hierbei nicht möglich, diese zusätzliche Stoßsicherung an bestimmte Anwendungen genau anzupassen. Hierzu wäre es erforderlich, die Kraft-Weg-Kennlinie bei der Deformation des Puffergehäuses entsprechend auszulegen, um einen vorhersehbaren, definierten Energieverzehr zu ermöglichen. Insbesondere ist die bekannte Lösung für viele Anwendungen nicht geeignet, da die über die Deformation des Puffergehäuses erzielbare maximale Energieaufnahme oftmals zu gering ist. Ein weiterer Nachteil ist darin zu sehen, dass nach Ansprechen der zusätzlichen Stoßsicherung der gesamte Seitenpuffer ausgetauscht werden muss, da die Stoßsicherung in dem Seitenpuffer integriert ist und durch eine zumindest teilweise Deformation des Puffergehäuses der Seitenpuffer nicht mehr für den normalen Fahrbetrieb einsetzbar ist.

Auf der Grundlage der geschilderten Problemstellung liegt somit der Erfindung die Aufgabe zugrunde einen Seitenpuffer mit einer Energieverzehreinheit anzugeben, bei welcher zum einen die durch einen extremen Stoß über den Seitenpuffer übertragene Stoßenergie zuverlässig abgebaut und zum anderen die Kraft-Weg-Kennlinie der Energieverzehreinheit an einzelne Anwendungen möglichst genau angepasst werden kann. Zusätzlich soll die Energieverzehreinheit für den nachträglichen Einbau bzw. Umrüstung eines herkömmlichen Seitenpuffers, in welchem keine destruktive Stoßsicherung vorgesehen ist, geeignet sein.

Diese Aufgabe wird durch den Gegenstand des Patentanspruches 1 gelöst.

Die Erfindung betrifft somit einen Seitznpuffer mit einer Energieverzehreinheit, welche als eine als ganzes austauschbare Baugruppe an dem Tragrahmen oder Untergestell eines Wagenkastens eines mehrgliedrigen Fahrzeuges, insbesondere Schienenfahrzeuges, anbringbar ist, wobei die Energieverzehreinheit eine Grundplatte zum vorzugsweise lösbaren Verbinden der Energieverzehreinheit an einer Tragstruktur, wie beispielsweise an dem Tragrahmen oder Untergestell eines Wagenkastens, eine Anschlussplatte, an welcher ein Bauteil zur Übertragung der im normalen Fahrbetrieb und im Crashfall auftretenden Kräfte anschließbar ist, und ein destruktives Energieverzehrelement aufweist, welches zwischen der Grundplatte und der Anschlussplatte spielfrei eingespannt ist. Das Energieverzehrelement ist dabei derart in der Energieverzehreinheit integriert, dass Stoßkräfte in Längsrichtung der Energieverzehreinheit übertragbar sind, und zwar indem der bei der Kraftübertragung auftretende Kraftfluss zumindest teilweise durch das Energieverzehrelement hindurchläuft. Das Energieverzehrelement selber ist derart ausgelegt, dass bis zu einem durch den Kraftfluss durch das Energieverzehrelement übertragenen festlegbaren Energiebetrag die Grundplatte und die Anschlussplatte relativ zueinander in Längsrichtung der Energieverzehreinheit im wesentlichen starr sind, und dass bei Überschreiten des durch den Kraftfluss durch das Energieverzehrelement übertragenen festlegbaren Energiebetrag bei gleichzeitiger plastischer Verformung des Energieverzehrelements die Grundplatte und die Anschlussplatte relativ zueinander in Längsrichtung der Energieverzehreinheit verschoben werden.

Bei der erfindungsgemäßen Lösung handelt es sich somit um eine Energieverzehreinheit, die als ein Modul, d.h. als eine als ganzes austauschbare Funktionsgruppe, ausgebildet ist. Damit ist es möglich, beispielsweise Seitenpuffer oder andere Bauteile zur Kraftübertragung auch nachträglich mit einer zusätzlichen Stoßsicherung auszurüsten. Hierzu ist es lediglich erforderlich, die Energieverzehreinheit zwischen dem Seitenpuffer bzw. Bauteil zur Kraftübertragung und dem Tragrahmen oder Untergestell von beispielsweise dem Wagenkasten einzubauen. Wenn die erfindungsgemäße Lösung in Kombination mit einem Seitenpuffer zum Einsatz kommt, dient der Seitenpuffer somit als regenerativ ausgebildete Stoßdämpfung, in welcher die während des normalen Fahrbetriebs beispielsweise bei einem mehrgliedrigen Fahrzeug zwischen den einzelnen Wagenkästen auftretenden Stoßkräfte absorbiert bzw. gedämpft werden. Bei Überschreiten der Betriebslast des regenerativ ausgebildeten und im Seitenpuffer integrierten Dämpfungselements hingegen spricht die dem Seitenpuffer nachgeschaltete Energieverzehreinheit an, wobei durch eine definierte plastische Verformung des destruktiven Energieverzehrelements die Stoßenergie in Verformungsarbeit und Wärme umgewandelt wird. Somit kann das regenerativ ausgebildete Dämpfungselement (Federapparat) des Seitenpuffers sowie die übrigen Bauteile des Seitenpuffers wirkungsvoll vor Zerstörung oder Beschädigung in einem Crashfall geschützt werden. Vielmehr ist es nur die Energieverzehreinheit, welche nach einem Crashfall als ganze Baugruppe auszutauschen ist.

Durch die Verwendung des zwischen der Grundplatte und der Anschlussplatte spielfrei eingespannten destruktiven Energieverzehrelements, welches bei einem spezifischen (festlegbaren) Energiebetrag anspricht, ist es möglich, die Kennlinie des Energieverzehrelements an einzelne Anwendungen genau anzupassen. So ist es insbesondere möglich, die Ansprechkraft und den maximal verzehrbaren Energiebetrag der Energieverzehreinheit im Voraus festgelegt und an bestimmte Anwendungen speziell angepasst werden. Demnach ist nicht nur das Ansprechverhalten, sondern auch der Ereignisablauf beim Energieverzehr vorab festlegbar.

Unter dem Ausdruck "im wesentlichen starr" ist in diesem Zusammenhang gemeint, dass zwischen der Grundplatte und der Anschlussplatte auch vor dem Ansprechen des Energieverzehrelement bzw. der Energieverzehreinrichtung im Idealfall kein Spiel vorliegt.

So ist es besonders bevorzugt, wenn der bei der Übertragung der Stoßkräfte in Längsrichtung der Energieverzehreinheit stattfindende Kraftfluss im wesentlichen vollständig durch das Energieverzehrelement hindurchläuft. Damit kann erreicht werden, dass der Energieverzehr der Energieverzehreinheit, und insbesondere die zu dem Energieverzehr charakteristische Ansprechkraft, vorab durch Auslegung des Energieverzehrelements genau festlegbar ist. Selbstverständlich ist es aber auch denkbar, dass der bei der Übertragung der Stoßkräfte in Längsrichtung der Energieverzehreinheit stattfindende Kraftfluss nur teilweise durch das Energieverzehrelement hindurchläuft, wobei der restliche Teil des Kraftflusses mit Hilfe von geeigneten Einrichtungen an dem Energieverzehrelement vorbeigeleitet wird, so dass dieser Teil direkt von der Anschlussplatte zu der Grundplatte übertragen wird.

In der erfindungsgemäßen Lösung ist das Energieverzehrelement als Verformungsrohr ausgebildet, welches sich bei Überschreiten des durch den Kraftfluss durch das Energieverzehrelement übertragenen, festlegbaren Energiebetrags vorzugsweise unter Querschnittserweiterung plastisch verformt und die Relativbewegung der Grundplatte und der Anschlussplatte zueinander zulässt. Eine Energieverzehreinheit, in welchem als Energieverzehrelement ein Verformungsrohr verwendet wird, zeichnet sich dadurch aus, dass es eine definierte Ansprechkraft ohne Kraftspitzen aufweist. Aufgrund der im wesentlichen rechteckig verlaufenden Kennlinie ist somit eine maximale Energieaufnahme nach Ansprechen der Energieverzehreinheit sichergestellt. Besonders bevorzugt wird beim Ansprechen der Energieverzehreinheit das Verformungsrohr unter gleichzeitiger Querschnittserweiterung plastisch verformt. Selbstverständlich ist allerdings auch eine Energieaufnahme unter gleichzeitiger Querschnittsverringerung des Verformungsrohres denkbar; hierzu wäre es erforderlich, das Verformungsrohr durch eine beispielsweise in der Grundplatte der Energieverzehreinheit vorgesehene Düsenöffnung zu drücken, so dass das plastisch verformte Energieverzehrelement aus der Energieverzehreinheit ausgestoßen wird. Bei einem Verformungsrohr, welches sich beim Ansprechen der Energieverzehreinheit unter Querschnittserweiterung plastisch verformt, kann ein derartiges Ausstoßen des verformten Energieverzehrelements verhindert werden. Aus diesem Grund wird derzeit die Ausführungsform mit dem unter Querschnittserweiterung verformbaren Energieverzehrelement bevorzugt.

In einer bevorzugten Ausbildung der zuletzt genannten Ausführungsform, bei welcher das Energieverzehrelement als Verformungsrohr ausgebildet ist, ist vorgesehen, dass das Verformungsrohr zwischen der Grundplatte und der Anschlussplatte über zumindest ein die Grundplatte mit der Anschlussplatte verbindendes Spannelement verspannt ist. Dadurch wird eine spielfreie Integration des Energieverzehrelements in der Energieverzehreinheit sichergestellt, wobei durch eine geeignete Vorspannung auch das Ansprechverhalten des Energieverzehrelements beeinflusst bzw. vorab festgelegt werden kann. Als Spannelemente kommen beispielsweise Stehbolzen zum Einsatz, die einerseits mit der Grundplatte fest verbunden und andererseits durch die Anschlussplatte hindurchlaufen und dort mit einer Mutter oder dergleichen Schraubverbindung arretiert sind. Dieser Stehbolzen bzw. das Spannelement dient nicht nur zum Verspannen des Verformungsrohres zwischen der Anschlussplatte und der Grundplatte, sondern übernimmt auch eine Längsführungsfunktion, wenn nach dem Ansprechen der Energieverzehreinheit das Verformungsrohr plastisch verformt wird und sich die Anschlussplatte auf die Grundplatte zubewegt. Dadurch, dass dem Spannelement auch eine Führungsfunktion zukommt, kann ein Verkeilen oder ein Verkanten der einzelnen Bauteile der Energieverzehreinheit beim Energieverzehr verhindert werden. Somit ist es möglich, insbesondere bei vertikaler oder schräger, also nicht völlig axialer Belastung des Verformungsrohres ein "Fressen" bzw. Verkeilen zu verhindern, so dass grundsätzlich die Funktion eines destruktiven Energieverzehrs sicher gegeben ist.

Indem die Wandstärke und das Material des Verformungsrohres entsprechend gewählt werden, kann der durch den Kraftfluss durch das Energieverzehrelement übertragene, für das Ansprechen des Energieverzehrelements charakteristische Energiebetrag vorab eingestellt werden. Dies ist ein weiterer wesentlicher Vorteil eines in der erfindungsgemäßen Energieverzehreinheit verwendeten Verformungsrohres.

Bei der erfindungsgemäßen Lösung ist vorgesehen, dass das Verformungsrohr mit seinem grundplattenseitigen Ende mit der Grundplatte stoff- und/oder formschlüssig verbunden ist, während an seinem anschlussplattenseitigen Ende ein Abschnitt vorgesehen ist, der einen im Vergleich zu einem weiter in Richtung Grundplatte liegenden Abschnitt aufgeweiteten Querschnitt hat. Bei dieser bevorzugten Ausführungsform sollte die Energieverzehreinheit ferner einen einstückig mit einem Führungselement ausgebildeten Kegelring aufweisen, dessen anschlussplattenseitiger Endabschnitt mit der Anschlussplatte verbunden ist, und dessen grundplattenseitiger Endabschnitt zumindest teilweise in den aufgeweiteten Abschnitt des Verformungsrohres hineinragt und an der Innenoberfläche dieses Verformungsrohrabschnittes anliegt.

Die mit dieser Ausführungsform erzielbaren Vorteile liegen auf der Hand. Einerseits wird durch das Vorsehen eines Verformungsrohres, welches zwischen der Grundplatte und der Anschlussplatte der Energieverzehreinheit eingespannt ist, eine Energieverzehreinrichtung bereitgestellt, die einen maximalen Energieverzehr bei einem möglichst kleinen Einbauraum ermöglicht. Durch die Verwendung eines Verformungsrohres, welches sich unter Querschnittserweiterung plastisch verformt, ist es insbesondere nicht erforderlich, einen zusätzlichen Raum vorzusehen, in welchen das plastisch verformte Verformungsrohr ausgestoßen wird. Andererseits ist mit der bevorzugten Ausführungsform durch das Vorsehen des Führungselements auch ein vorab sehr genau festlegbarer Ereignisablauf beim Energieverzehr beispielsweise in einem Crashfall möglich.

Dieses Führungselement, welches einstückig mit dem Kegelring ausgebildet ist und über sein anschlussplattenseitiges Ende mit der Anschlussplatte der Energieverzehreinheit verbunden ist, ragt mit seinem grundplattenseitigen Endabschnitt zumindest teilweise in den Verformungsrohrabschnitt hinein, dessen Querschnitt vor Ansprechen der Energieverzehreinheit bereits einen im Vergleich zu einem weiter in Richtung Grundplatte liegenden Verformungsrohrabschnitt aufgeweiteten Querschnitt aufweist. Da einerseits das Führungselement zumindest teilweise in den aufgeweiteten Verformungsrohrabschnitt hineinragt und an der Innenoberfläche dieses Rohrabschnittes anliegt, läuft beim Ansprechen der Energieverzehreinheit, also wenn sich die Anschlussplatte mit dem Kegelring und dem Führungselement relativ zu der Grundplatte und dem mit der Grundplatte stoff-und/oder formschlüssig verbundenen Verformungsrohr in Richtung Grundplatte bewegt, der grundplattenseitige Endabschnitt des Führungselements an der Innenoberfläche des (noch) nicht aufgeweiteten Verformungsrohrabschnittes entlang und bewirkt somit eine axiale Führung beim Energieverzehr. Diese axiale Führung verhindert ein Verkanten der Anschlussplatte bzw. des Kegelringes beim Ansprechen der Energieverzehreinheit in dem Verformungsrohr, so dass die plastische Verformung des Verformungsrohres (d.h. die plastische Querschnittsaufweitung des Verformungsrohres) in einer genau vorhersehbaren Weise abläuft und der Ereignisablauf des Energieverzehrs im Crashfall insgesamt genau vorhersehbar ist.

Bei der zuletzt genannten bevorzugten Ausführungsform ist es im Hinblick auf die Herstellung der Energieverzehreinheit von Vorteil, wenn der Kegelring und der Führungselement einstückig mit der Anschlussplatte ausgebildet ist. Selbstverständlich ist es aber auch denkbar, dass der Kegelring mit dem Führungselement über einen formschlüssigen Eingriff oder über eine kraftschlüssige Verbindung mit der Anschlussplatte entsprechend verbunden ist.

Schließlich ist als weiterer Vorteil der zuletzt genannten Ausführungsform zu nennen, dass die für das Ansprechen des Verformungsrohres charakteristische Ansprechkraft über die Wandstärke des Verformungsrohres, das Material des Verformungsrohres sowie über den Grad der Aufweitung des anschlussplattenseitigen Verformungsrohrabschnittes vorab genau einstellbar ist.

Kurz zusammengefasst bleibt festzuhalten, dass die erfindungsgemäße Energieverzehreinheit eine Stoßsicherung bereitstellt, bei welcher vorab sowohl das Ansprechverhalten als auch der Ereignisablauf beim Energieverzehr festlegbar ist. Durch eine geeignete Wahl des Energieverzehrelements ist auch bei einer geringen Baugröße ein maximaler Energieverzehr möglich. Die Energieverzehreinheit eignet sich insbesondere zum Nachrüsten eines Seitenpuffers bzw. UIC-Puffers als zusätzliche irreversible Stoßsicherungsstufe, wobei dieser Seitenpuffer bzw. UIC-Puffer an der Anschlussplatte der Energieverzehreinheit vorzugsweise demontierbar angeschraubt ist.

Nachfolgend wird eine bevorzugte Ausführungsform der erfindungsgemäßen Energieverzehreinheit anhand der beigefügten Zeichnungen näher beschrieben.

Es zeigen:
- Fig. 1:: die bevorzugte Ausführungsform der erfindungsgemäßen Energieverzehreinheit als zusätzliche Stoßsicherungsstufe für einen UIC-Puffer;

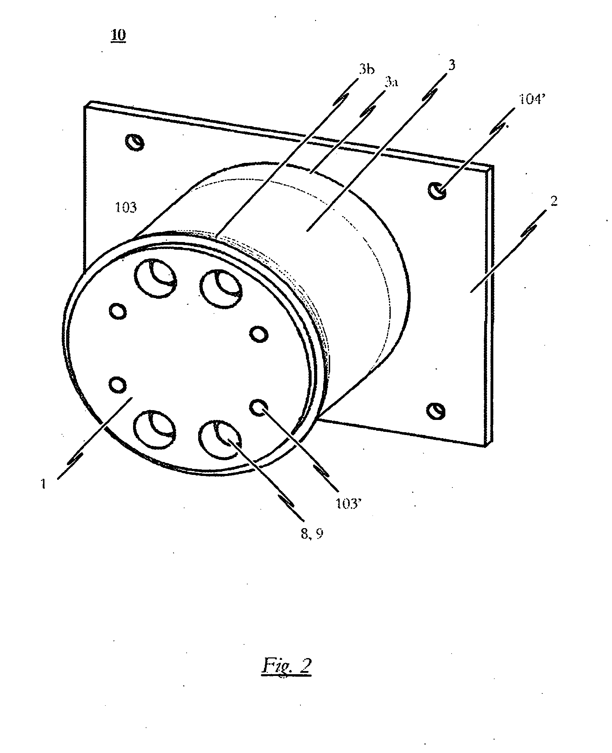

- Fig. 2:: die Energieverzehreinheit gemäß Fig. 1 in einer Einzeldarstellung; und
- Fig. 3:: eine Querschnittsansicht durch die Energieverzehreinheit gemäß Fig. 2.

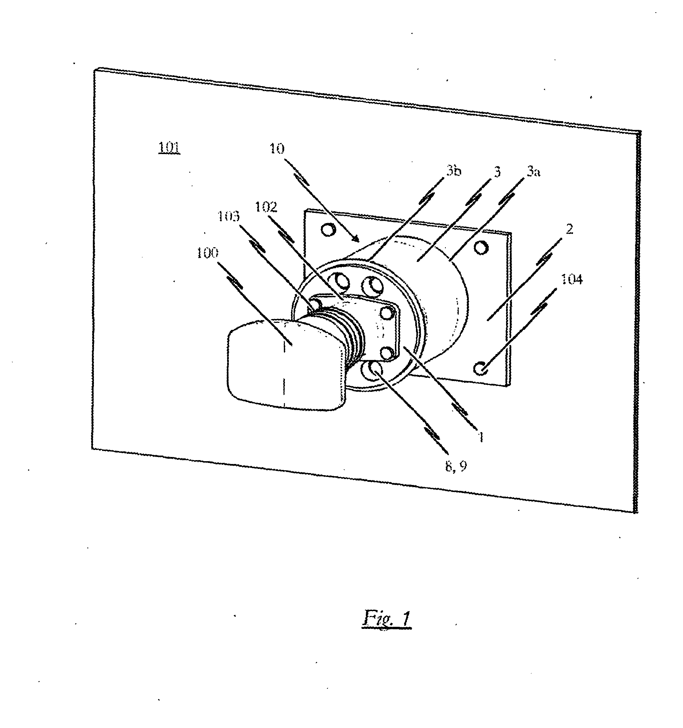

Die in Fig. 1 dargestellte Energieverzehreinheit 10 kommt in Verbindung mit einem herkömmlichen Seitenpuffer bzw. UIC-Puffer 100 zum Einsatz, wobei dieser Puffer beispielsweise ohne eine zusätzliche Stoßsicherung ausgerüstet ist. Hierzu wird der UIC-Puffer 100 über seinen Anschlussflansch 102 an der Anschlussplatte 1 der Energieverzehreinheit 10 befestigt. Dabei bieten sich die bereits für den Anschlussflansch 102 des Puffers 100 vorgesehene Befestigungsmittel 103 an, welche bei der dargestellten Ausführungsform insgesamt vier Schrauben sind, die in entsprechende in der Anschlussplatte 1 vorgesehene Gewindelöcher 103' einschraubbar sind.

Die Energieverzehreinheit 10 umfasst ferner eine Grundplatte 2, mit welcher die Energieverzehreinheit 10 beispielsweise an einem Tragrahmen oder Untergestell eines Wagenkastens 101 oder aber auch an andere feste oder bewegliche Tragstrukturen verbunden werden kann. Bei der dargestellten Ausführungsform kommen hierzu insgesamt vier Befestigungsschrauben 104 zum Einsatz, die durch entsprechende in der Grundplatte 2 vorgesehene Durchganglöcher 104' hindurchlaufen und in geeigneten (in den Figuren nicht explizit dargestellte) Gewindelöcher aufgenommen werden.

Dadurch, dass einerseits die Energieverzehreinheit 10 über die Grundplatte 2 lösbar an der Tragstruktur 101 befestigt werden kann, und dass andererseits an der Anschlussplatte 1 der Energieverzehreinheit 10 ein weiteres zusätzliches Bauteil 100, wie beispielsweise ein Seitenpuffer oder ein UIC-Puffer, ebenfalls lösbar angebracht werden kann, liegt die Energieverzehreinheit als eine als ganzes austauschbare Funktionsgruppe vor, die sich insbesondere für den nachträglichen Einbau oder Austausch eignet, ohne dass hierfür Änderungen an der Tragstruktur 101 oder an dem Bauteil 100 vorgenommen werden müssen.

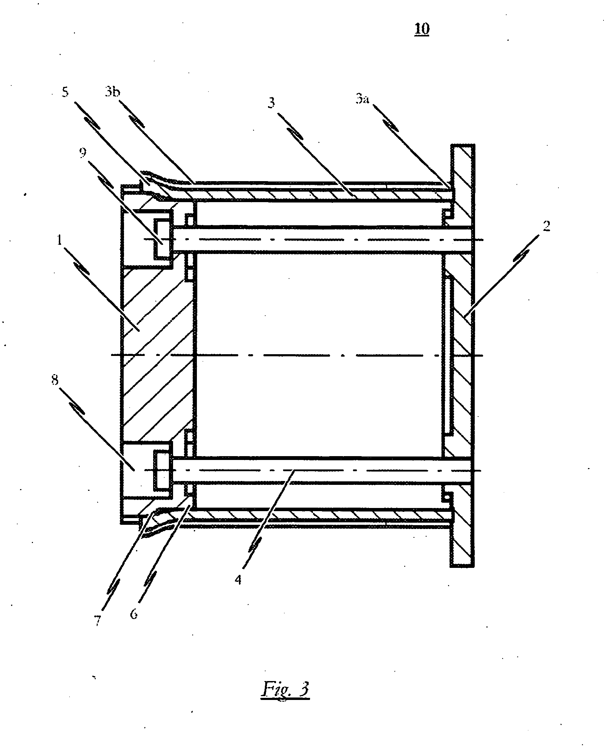

Die Energieverzehreinheit 10 der in den Zeichnungen dargestellten bevorzugten Ausführungsform umfasst neben der bereits beschriebenen Grundplatte 2 und der Anschlussplatte 1 des weiteren als destruktives Energieverzehrelement 3 ein Verformungsrohr, welches zwischen der Grundplatte 2 und der Anschlussplatte 1 spielfrei eingespannt ist. Wie es insbesondere der Fig. 3 zu entnehmen ist, kommen hierzu Spannelemente 4 in Gestalt von Stehbolzen zum Einsatz. Die Spannelemente sind mit ihren grundplatteseitigen Enden form-, kraft- und/oder stoffschlüssig mit der Grundplatte 2 verbunden, erstrecken sich durch nahezu die gesamte Länge des Verformungsrohres 3 und laufen durch entsprechende in der Anschlussplatte 1 eingebrachte Durchgangslöcher. Das stirnseitige Ende der Spannelemente 4 ist mit Muttern 9 gegenüber der Anschlussplatte 1 gesichert. Um eine ebene bzw. flache Stirnseite der Anschlussplatte 1 sicherzustellen sind hierzu Ausnehmungen 8 in der Anschlussplatte eingebracht in welchen die jeweiligen Muttern 9 aufgenommen sind.

Wie bereits erwähnt, dienen die Spannelemente 4 zum Verspannen des Verformungsrohres 3 zwischen der Grundplatte 2 und der Anschlussplatte 1. Den Spannelementen 4 kommt zusätzlich hierzu ferner eine Führungsfunktion zu, da diese aufgrund ihrer Konstruktion die Anschlussplatte 1 entsprechend führen, wenn sich nach dem Ansprechen der Energieverzehreinheit 10 die Anschlussplatte 1 relativ zu dem Verformungsrohr 3 und der Grundplatte 2 in Richtung der Grundplatte 2 bewegt.

Eine weitere Axialführung ist über den mit dem Führungselement 6 ausgebildeten konischen Kegelring 7 vorgesehen. Bei der dargestellten Ausführungsform sind das Führungselement 6, der Kegelring 7 und die Anschlussplatte 1 einstückig ausgebildet; dies ist allerdings nicht zwingend erforderlich.

Im Einzelnen, und wie es insbesondere der Fig. 3 zu entnehmen ist, ist das Verformungsrohr 3 über sein grundplattenseitiges Ende 3a mit der Grundplatte 2 stoff-, form- und/oder kraftschlüssig verbunden. Andererseits weist das Verformungsrohr 3 an seinem anschlussplattenseitigen Ende 3b einen Abschnitt 5 auf, welcher einen im Vergleich zu einem weiter in Richtung Grundplatte 2 liegenden Abschnitt aufgeweiteten Querschnitt hat. Dieser aufgeweitete Verformungsrohrabschnitt 5 steht in Wechselwirkung mit dem Führungselement 6 und dem Kegelring 7. Dabei ragt der grundplattenseitige Endabschnitt des Führungselementes 6 zumindest teilweise in den aufgeweiteten Verformungsrohrabschnitt 5 hinein und liegt an der Innenoberfläche dieses Verformungsrohrabschnittes 5 an. Beim Ansprechen der Energieverzehreinheit 10, also dann, wenn sich die Anschlussplatte 1 relativ zu der Grundplatte 2 und dem mit der Grundplatte 2 fest verbundenen Verformungsrohr 3 in Richtung Grundplatte 2 bewegt, läuft der grundplattenseitige Endabschnitt des Führungselements 6 an der Innenoberfläche des (noch) nicht aufgeweiteten Verformungsrohrabschnittes entlang und bewirkt somit - zusammen mit den Spannelementen 4 - eine axiale Führung der Grundplatte 2. Diese axiale Führung der Grundplatte 2 verhindert ein Verkanten der Grundplatte 2, des Kegelringes 7 bzw. des Führungselementes 6 beim Ansprechen der Energieverzehreinheit 10 in dem Verformungsrohr 5, wobei dies auch dann gilt, wenn nicht nur rein axiale Kräfte übertragen werden. Insgesamt läuft somit die plastische Verformung des Verformungsrohres, d.h. die plastische Querschnittsaufweitung des Verformungsrohres 5, in einer vorhersehbaren Weise ab, und der Ereignisablauf des Energieverzehrs im Crashfall ist insgesamt vorhersehbar.

Die Ausführung der Erfindung ist nicht auf das unter Bezugnahme auf die Figuren beschriebene Ausführungsbeispiel beschränkt.

### Bezugszeichenliste

- 1: Anschlussplatte
- 2: Grundplatte
- 3: Energieverzehrelement/Verformungsrohr
- 3a: grundplattenseitiges Ende des Verformungsrohres
- 3b: anschlussplattenseitiges Ende des Verformungsrohres
- 4: Spannelement
- 5: Verformungsrohrabschnitt mit aufgeweitetem Querschnitt
- 6: Führungselement
- 7: Kegelring
- 8: Ausnehmung
- 9: Mutter
- 10: Energieverzehreinheit
- 100: UIC-Puffer/Seitenpuffer
- 101: Tragstruktur/Wagenkasten
- 102: Anschlussflansch des UIC-Puffers bzw. Seitenpuffers
- 103: Befestigungsmittel
- 103': Gewindelöcher
- 104: Befestigungsmittel
- 104': Befestigungslöcher

## Patentansprüche

1. Seitenpuffer (100), insbesondere UIC-Puffer, welcher als zusätzliche irreversible Stoßsicherungsstufe eine Energieverzehreinheit (10) aufweist, wobei der Seitenpuffer (100) an einer Anschlussplatte (1) der Energieverzehreinheit (10) demontierbar angeschraubt ist, und wobei die Energieverzehreinheit (10) als eine als Ganzes austauschbare Baugruppe an einer Tragstruktur (101) anbringbar ist, und wobei die Energieverzehreinheit (10) folgendes aufweist:
- eine Grundplatte (2) zum lösbaren Verbinden der Energieverzehreinheit (10) an einer Tragstruktur (101), wie beispielsweise an dem Tragrahmen oder Untergestell eines Wagenkastens eines mehrgliedrigen Fahrzeuges, insbesondere Schienenfahrzeuges;
- die Anschlussplatte (1), an welcher der Seitenpuffer (100) angeschraubt ist; und
- ein destruktiv ausgebildetes Energieverzehrelement (3) in Gestalt eines Verformungsrohres, welches derart in der Energieverzehreinheit (10) integriert ist, dass Stoßkräfte in Längsrichtung der Energieverzehreinheit (10) übertragbar sind, indem der bei der Übertragung stattfindende Kraftfluss zumindest teilweise durch das Energieverzehrelement (3) hindurchläuft, und welches derart ausgelegt ist, dass bis zu einem durch den Kraftfluss durch das Energieverzehrelement (3) übertragenen, festlegbaren Energiebetrag die Grundplatte (2) und die Anschlussplatte (1) relativ zueinander in Längsrichtung der Energieverzehreinheit (10) im Wesentlichen starr sind, und dass bei Überschreiten des durch den Kraftfluss durch das Energieverzehrelement (3) übertragenen, festlegbaren Energiebetrags bei gleichzeitiger plastischer Verformung des Energleverzehrelements (3) die Grundplatte (2) und die Anschlussplatte (1) relativ zueinander in Längsrichtung der Energieverzehreinheit (10) verschoben werden,
wobei das Energieverzehrelement (3) zwischen der Grundplatte (2) und der Anschlussplatte (1) über zumindest ein die Grundplatte (2) mit der Anschlussplatte (1) verbindendes Spannelement (4) verspannt ist,
**dadurch gekennzeichnet, dass**
das Verformungsrohr (3) mit seinem grundplattenseitigen Ende (3a) mit der Grundplatte (2) stoff- und/oder formschlüssig verbunden ist, und an seinem anschlussplattenseitigen Ende (3b) einen Abschnitt (5) aufweist, welcher einen im Vergleich zu einem weiter in Richtung Grundplatte (2) liegenden Abschnitt aufgeweiteten Querschnitt hat, und wobei die Energieverzehreinheit (3) ferner einen einstückig mit einem Führungselement (6) ausgebildeten Kegelring (7) aufweist, dessen anschlussplattenseitiger Endabschnitt mit der Anschlussplatte (1) verbunden ist, und dessen grundplattenseitiger Endabschnitt zumindest teilweise in den aufgeweiteten Abschnitt (5) des Verformungsrohres (3) hineinragt und an der Innenoberfläche dieses Verformungsrohrabschnittes (5) anliegt.

2. Seitenpuffer (100) nach Anspruch 1, wobei
der Kegelring (7) mit dem Führungselement (6) einstückig mit der Anschlussplatte (1) ausgebildet ist.

3. Seitenpuffer (100) nach Anspruch 1 oder 2, wobei
die für das Ansprechen des Verformungsrohres (3) charakteristische Ansprechkraft über die Wandstärke des Verformungsrohres (3), das Material des Verformungsrohres (3) sowie über den Grad der Aufweitung des anschlussplattenseitigen Verformungsrohrabschnittes (5) vorab einstellbar ist.

4. Seitenpuffer (100) nach einem der vorhergehenden Ansprüche, wobei
der bei der Übertragung der Zug- und Stoßkräfte in Längsrichtung der Energieverzehreinheit (10) stattfindende Kraftfluss im Wesentlichen vollständig durch das Energieverzehrelement (3) hindurchläuft.

5. Seitenpuffer (100) nach einem der vorhergehenden Ansprüche, wobei
das Energieverzehrelement (3) als Verformungsrohr ausgebildet ist, welches sich bei Überschreiten des durch den Kraftfluss durch das Energieverzehrelement (3) übertragenen, festlegbaren Energiebetrags unter Querschnittserweiterung oder Querschnittsverringerung plastisch verformt und die Relativbewegung der Grundplatte (2) und der Anschlussplatte (1) zueinander zulässt.

6. Seitenpuffer (100) nach einem der vorhergehenden Ansprüche, wobei
das Verformungsrohr (3) zwischen der Grundplatte (2) und der Anschlussplatte (1) über das zumindest eine Spannelement (4) derart verspannt ist, dass eine geeignete Vorspannung ausgeübt wird, über welche das Ansprechverhalten des Energieverzehrelements (3) vorab festlegbar ist.

7. Seitenpuffer (100) nach einem der vorhergehenden Ansprüche, wobei
der durch den Kraftfluss durch das Energieverzehrelement (3) übertragene für das Ansprechen des Energieverzehrelements (3) charakteristische Energiebetrag durch die Wandstärke und das Material des Verformungsrohres vorab einstellbar ist.

## Claims

1. Side buffer (100), in particular UIC buffer, comprising an energy-absorbing unit (10) as an additional irreversible shock-absorbing stage, wherein the side buffer (100) is removably bolted on to a connecting plate (1) of the energy-absorbing unit (10) and the energy-absorbing unit (10) can be mounted on a supporting structure (101) as one complete exchangeable module, the energy-absorbing unit (10) comprising the following:
- a base plate (2) for detachably connecting the energy-absorbing unit (10) to a supporting structure (101), such as, e.g. to the supporting frame or underframe of a coach body of a multiple-unit vehicle, in particular rail vehicle;
- the connecting plate (1) to which the side buffer (100) is bolted, and
- a destructive energy-absorbing element (3) in the form of a deformation tube integrated into the energy-absorbing unit (10) in such a manner that impact forces can be transmitted in the longitudinal direction of the energy-absorbing unit (10) in that the force flow arising when impact forces are transmitted runs at least partly through the energy-absorbing element (3), and designed in such a manner that the base plate (2) and the connecting plate (1) are substantially rigid relative to one another in the longitudinal direction of the energy-absorbing unit (10) up to a defined amount of energy transmitted by the force flow through the energy-absorbing element (3) and that, when the defined amount of energy transmitted by the force flow through the energy-absorbing element (3) is exceeded, the base plate (2) and the connecting plate (1) are displaced relative to one another in the longitudinal direction of the energy-absorbing unit (10) with simultaneous plastic deformation of the energy-absorbing element (3),
the energy-absorbing element (3) being braced between the base plate (2) and the connecting plate (1) by means of at least one tensioning element (4) connecting the base plate (2) to the connecting plate (1),
**characterised in that**
the deformation tube (3) is integrally and/or positively connected to the base plate (2) by means of its base plate end (3a) and is provided at its connecting plate end (3b) with a section (5) having an expanded cross section compared to a section situated closer to the base plate (2), and the energy-absorbing unit (3) further comprises a conical ring (7) formed in one piece with a guide element (6), the end section of which on the connecting plate side is connected to the connecting plate (1) and the end section of which on the base plate side projects at least partly into the expanded section (5) of the deformation tube (3) and bears against the inner surface of this deformation tube section (5).

2. Side buffer (100) according to claim 1, wherein the conical ring (7) with the guide element (6) is formed in one piece with the connecting plate (1).

3. Side buffer (100) according to claim 1 or claim 2, wherein the activation force characteristic of the activation of the deformation tube (3) can be preset by means of the wall thickness of the deformation tube (3), the material of the deformation tube (3) and the degree of expansion of the deformation tube section (5) on the connecting plate side.

4. Side buffer (100) according to one of the preceding claims, wherein the force flow arising when tractive and impact forces are transmitted in the longitudinal direction of the energy-absorbing unit (10) runs substantially completely through the energy-absorbing element (3).

5. Side buffer (100) according to one of the preceding claims, wherein the energy-absorbing element (3) is designed as a deformation tube which is plastically deformed with cross-sectional expansion or cross-sectional reduction when the defined amount of energy transmitted by the force flow through the energy-absorbing element (3) is exceeded and allows for the relative movement of the base plate (2) and the connecting plate (1).

6. Side buffer (100) according to one of the preceding claims, wherein the deformation tube (3) is braced between the base plate (2) and the connecting plate (1) by means of the at least one tensioning element (4) so as to exert suitable pretensioning by means of which the response characteristics of the energy-absorbing element (3) can be predefined.

7. Side buffer (100) according to one of the preceding claims, wherein the amount of energy transmitted by the force flow through the energy-absorbing element (3) characteristic of the activation of the energy-absorbing element (3) can be preset by the wall thickness and the material of the deformation tube.

## Revendications

1. Tampon latéral (100), en particulier tampon UIC, qui comprend une unité de destruction d'énergie (10) à titre d'étage de protection antichoc additionnel irréversible, ledit tampon latéral (100) étant vissé de façon démontable sur une plaque de raccordement (1) de l'unité de destruction d'énergie (10), et l'unité de destruction d'énergie (10) est susceptible d'être montée sur une structure porteuse (101) sous la forme d'un sous-ensemble interchangeable dans sa totalité, et l'unité de destruction d'énergie (10) comporte les éléments suivants :
- une plaque de base (2) pour la liaison détachable de l'unité de destruction d'énergie (10) sur une structure porteuse (101), comme par exemple sur le cadre porteur ou le châssis d'une caisse de wagon d'un véhicule à plusieurs maillons, en particulier d'un véhicule ferroviaire,
- la plaque de raccordement (1) sur laquelle est vissé le tampon latéral (100) ; et
- un élément de destruction d'énergie (3) réalisé de manière destructive sous la forme d'un tube à déformation, lequel est intégré dans l'unité de destruction d'énergie (10) de telle manière que des forces de choc sont transmissibles en direction longitudinale de l'unité de destruction d'énergie (10) en ce que le flux des forces qui se produit lors de la transmission traverse au moins partiellement l'élément de destruction d'énergie (3), et conçu de telle manière que, jusqu'à une valeur d'énergie transmise via le flux des forces traversant l'élément de destruction d'énergie (3) et susceptible d'être déterminée, la plaque de base (2) et la plaque de raccordement (1) sont essentiellement rigides l'une par rapport à l'autre en direction longitudinale de l'unité de destruction d'énergie (10), et lors d'un dépassement de la valeur d'énergie transmise via le flux des forces traversant l'élément de destruction d'énergie (3) et susceptible d'être déterminée, avec déformation plastique simultanée de l'élément de destruction d'énergie (3), la plaque de base (2) et la plaque de raccordement (1) sont déplacées l'une par rapport à l'autre en direction longitudinale de l'unité de destruction d'énergie (10),
dans lequel l'élément de destruction d'énergie (3) est serré entre la plaque de base (2) et la plaque de raccordement (1) via au moins un élément de serrage (4) qui relie la plaque de base (2) à la plaque de raccordement (1),
**caractérisé en ce que**
le tube de déformation (3) est relié, par son extrémité côté plaque de base (3a), à la plaque de base (2) par coopération de matières et/ou par coopération de formes, et présente à son extrémité côté plaque de raccordement (3b) un tronçon (5) qui possède une section transversale élargie par comparaison à un tronçon qui se trouve plus loin en direction de la plaque de base (2), et dans lequel l'unité de destruction d'énergie (3) comporte en outre une bague conique (7) réalisée d'un seul tenant avec un élément de guidage (6), dont le tronçon terminal, côté plaque de raccordement, est relié à la plaque de raccordement (1), et dont le tronçon terminal, du côté de la plaque de base, pénètre au moins partiellement dans la section élargie (5) du tube de déformation (3), et s'applique contre la surface intérieure de ce tronçon de tube à déformation (5).

2. Tampon latéral (100) selon la revendication 1, dans lequel
la bague conique (7) avec l'élément de guidage (6) est réalisée d'un seul tenant avec la plaque de raccordement (1).

3. Tampon latéral (100) selon la revendication 1 ou 2, dans lequel
la force de réaction caractéristique pour la réaction du tube à déformation (3) est préalablement réglable via l'épaisseur de paroi du tube à déformation (3), via le matériau du tube à déformation (3) ainsi que via le degré de l'élargissement du tronçon du tube à déformation (5) du côté de la plaque de raccordement.

4. Tampon latéral (100) selon l'une des revendications précédentes,
dans lequel le flux des forces qui se produit lors de la transmission des forces de traction et des forces de choc en direction longitudinale de l'unité de destruction d'énergie (10) traverse sensiblement totalement l'élément de destruction d'énergie (3).

5. Tampon latéral (100) selon l'une des revendications précédentes,
dans lequel l'élément de destruction d'énergie (3) est réalisé sous forme de tube à déformation qui, lors d'un dépassement de la valeur d'énergie transmise par le flux des forces à travers l'élément de destruction d'énergie (3) et susceptible d'être déterminée, se déforme de manière plastique avec élargissement ou rétrécissement de la section transversale, et permet le mouvement relatif de la plaque de base (2) et de la plaque de raccordement (1).

6. Tampon latéral (100) selon l'une des revendications précédentes,
dans lequel le tube à déformation (3) est serré entre la plaque de base (2) et la plaque de raccordement (1) via ledit au moins un élément de serrage (4) de telle manière qu'une précontrainte appropriée est exercée, via laquelle le comportement de réaction de l'élément de destruction d'énergie (3) est prédéterminable.

7. Tampon latéral (100) selon l'une des revendications précédentes,
dans lequel la valeur d'énergie transmise par le flux des forces à travers l'élément de destruction d'énergie (3) et caractéristique pour la réaction de l'élément de destruction d'énergie (3) est préalablement réglable via l'épaisseur de paroi et via le matériau du tube à déformation.
